# EUROPEAN PATENT APPLICATION

(11) **EP 4 831 221 A2**
(43) Date of publication of application: **28.10.2026**
(21) Application number: 26170498.5
(22) Date of filing: 02.04.2026
(51) Int. Cl.: C08G 61/12, C08J 3/12, C08J 3/14, C08L 1/16, C08L 65/00

(54) **METHOD FOR PRODUCING DRIED SOLID, AND DRIED SOLID**

(30) Priority: 03.04.2025 JP 2025061949
(71) Applicant: Yokogawa Electric Corporation, Musashino-shi, Tokyo 180-8750 (JP)
(72) Inventor: Yokomizo, Tomofumi, Musashino-shi, Tokyo, 180-8750 (JP); Iwamoto, Shinichiro, Musashino-shi, Tokyo, 180-8750 (JP)
(74) Representative: Grünecker Patent- und Rechtsanwälte PartG mbB

(57) **Abstract**

Provided is a dried solid comprising a composite having heat-ray absorption properties, and a method for producing the dried solid, the dried solid allowing the composite to be redispersed in water, the redispersed composite to exhibit excellent heat-ray absorption properties. The method for producing a dried solid comprising a composite comprising a sulfated polysaccharide and polythiophene, comprises: separating a solid phase from a dispersion of the composite comprising the sulfated polysaccharide and the polythiophene; and drying the solid phase to obtain the dried solid having a moisture content of 15 wt% or more.

## Description

### BACKGROUND

### Technical Field

The present disclosure relates to a method for producing a dried solid and a dried solid.

### Background Art

About 40% of the radiant energy of solar rays is occupied by infrared rays. Since the thermal effect of the infrared rays is high, they are called heat rays. A window material used in office buildings, automobiles, and the like and requiring transparency generally transmits heat rays well, so it is known that the temperature inside a room or inside a vehicle increases.

Therefore, for the purpose of achieving energy saving, imparting to a window material a function to reflect or absorb heat rays has been considered. As means for imparting to a window material the function to reflect or absorb heat ray (heat-ray shielding property), for example, a method has been proposed in which an infrared absorbing film comprising tin-doped indium oxide (ITO) fine particles, antimony-doped tin oxide (ATO) fine particles, cesium tungstate, or the like is adhered to glass windows.

Antimony and cesium both have toxicity, and indium is expensive because it is a rare metal, and alternatives to these materials are strongly desired. In addition, when the added amount of inorganic fine particles having heat-ray shielding property is increased to lower the solar transmittance in order to enhance the heat-ray shielding property, the transmittance of visible light similarly decreases, and conversely, when the transmittance of visible light is increased in order to take in external light, the solar transmittance increases and the heat-ray shielding property decreases, which has been a problem.

In order to address such problems, JP 2020-111747 A discloses, as a heat-ray absorbing material that is low in load on the environment and is low cost, a heat-ray absorbing material comprising a sulfated cellulose nanocrystal represented by Chemical Formula 1 below, obtained from fibrous cellulose having a fiber width in the range of 3 nm to 1500 nm, and a polythiophene doped with the sulfated cellulose nanocrystal, and a production method thereof.

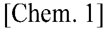

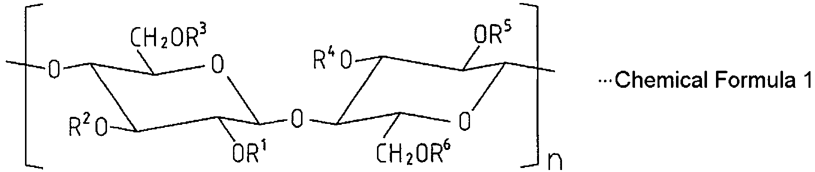

R¹ to R⁶ shown in Chemical Formula 1 each independently represent a hydrogen atom, a sulfo group, or an alkyl sulfo group having 1 to 6 carbon atoms, and at least one of R¹ to R⁶ is a sulfo group or an alkyl sulfo group having 1 to 6 carbon atoms. In addition, ***n*** in Chemical Formula 1 indicates the repetition of the unit in parentheses.

### SUMMARY

In the production method of JP 2020-111747 A, a heat-ray absorbing material dispersed in water is produced. From the viewpoint of cost reduction of transportation and storage of the heat-ray absorbing material, it is advantageous to perform drying to remove water to obtain a dried solid of the heat-ray absorbing material, to perform transportation and/or storage of the dried solid, to mix the dried solid with water to cause dispersion (that is, redispersion) of the heat-ray absorbing material in water, and to use the resultant dispersion (that is, redispersed dispersion) in the manufacture of products such as an infrared absorbing film. However, according to investigations by the present inventors, it was difficult to redisperse the heat-ray absorbing material disclosed in JP 2020-111747 A in water to exhibit its original heat-ray absorption properties because hydrogen bonds are formed and crystallization of polythiophene proceeds during the drying process.

Accordingly, one object of the present disclosure is to provide a production method for a dried solid comprising a composite having heat-ray absorption properties, the method allowing redispersion of the composite in water and allowing the redispersed composite to exhibit excellent heat-ray absorption properties. Also, another object of the present disclosure is to provide a dried solid comprising a composite having the heat-ray absorption properties, the solid allowing redispersion of the composite in water and allowing the redispersed composite to exhibit the excellent heat-ray absorption properties.

The aspects of the present disclosure comprise the following.
[Aspect 1] A method for producing a dried solid comprising a composite comprising a sulfated polysaccharide and polythiophene, the method comprising:
   separating a solid phase from a dispersion of the composite comprising the sulfated polysaccharide and the polythiophene; and
   drying the solid phase to obtain the dried solid having a moisture content of 15 wt% or more.
[Aspect 2] The method according to Aspect 1,
   wherein the dispersion of the composite comprises water and an organic solvent as a dispersion medium.
[Aspect 3] The method according to Aspect 1 or 2,
   wherein the moisture content of the dried solid is 30 wt% or less.
[Aspect 4] The method according to any one of Aspects 1 to 3,
   wherein the dried solid is obtained by drying the solid phase at a temperature of 60°C or lower.
[Aspect 5] The method according to any one of Aspects 1 to 4,
   wherein the separating of the solid phase from the dispersion comprises at least one of filtration or sedimentation separation of the dispersion.
[Aspect 6] The method according to Aspect 5,
   wherein the separating of the solid phase from the dispersion comprises centrifugal filtration of the dispersion.
[Aspect 7] The method according to any one of Aspects 1 to 6,
   wherein the dispersion of the composite is prepared without dialysis.
[Aspect 8] The method according to any one of Aspects 1 to 7,
   wherein the sulfated polysaccharide is at least one selected from the group consisting of amorphous sulfated polysaccharide and sulfated cellulose nanofibers.
[Aspect 9] The method according to Aspect 8,
   wherein the amorphous sulfated polysaccharide is at least one selected from the group consisting of a sulfated polysaccharide represented by Formula (1) below, a sulfated polysaccharide represented by Formula (2) below, carrageenan, sacran, rhamnan sulfate, fucoidan, chondroitin sulfate, porphyran, funoran, dermatan sulfate, and heparin, 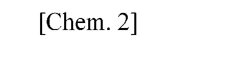 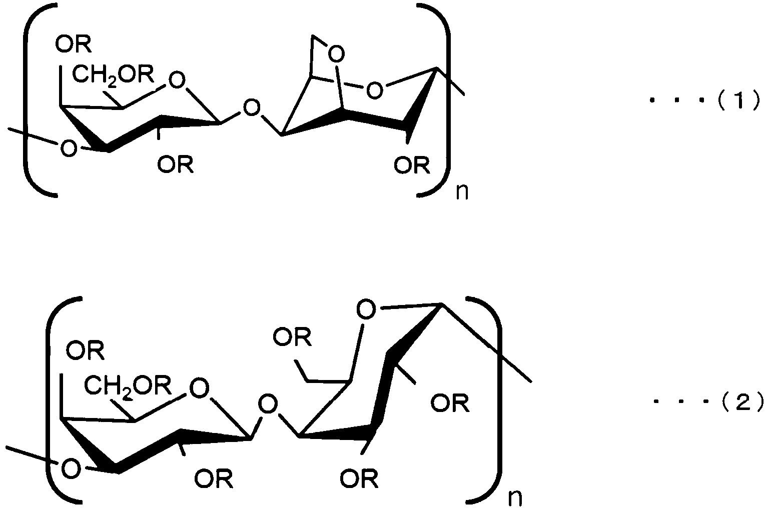
   wherein, in Formulae (1) and (2), each R is independently a hydrogen atom or a group represented by Formula (3), at least one R in each pair of parentheses is a group represented by Formula (3), and ***n*** represents a degree of polymerization, 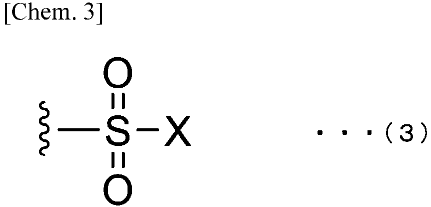
   wherein, in Formula (3), X is a hydroxyl group or -O⁻(M^{m+})_{1/m}, M^{m+} is an m-valent cation, ***m*** is 1, 2, or 3, and the wavy line is a bonding site with another atom.
[Aspect 10] The method according to Aspect 9,
   wherein the amorphous sulfated polysaccharide is carrageenan.
[Aspect 11] The method according to Aspect 10,
   wherein the amorphous sulfated polysaccharide is at least one selected from the group consisting of lambda-carrageenan, kappa-carrageenan, and iota-carrageenan.
[Aspect 12] A dried solid comprising:
   a composite comprising a sulfated polysaccharide and polythiophene,
   wherein the dried solid has a moisture content of 15 wt% or more.
[Aspect 13] The dried solid according to Aspect 12,
   wherein the moisture content of the dried solid is 30 wt% or less.
[Aspect 14] The dried solid according to Aspect 12 or 13,
   wherein, in an aqueous dispersion prepared by adding 1 part by weight of the dried solid to 999 parts by weight of deionized water, the composite has a form of particles having a median diameter D50 within a range of 20 nm to 120 nm.
[Aspect 15] The dried solid according to any one of Aspects 12 to 14,
   wherein the sulfated polysaccharide is at least one selected from the group consisting of amorphous sulfated polysaccharide and sulfated cellulose nanofibers.
[Aspect 16] The dried solid according to Aspect 15,
   wherein the amorphous sulfated polysaccharide is at least one selected from the group consisting of a sulfated polysaccharide represented by Formula (1) below, a sulfated polysaccharide represented by Formula (2) below, carrageenan, sacran, rhamnan sulfate, fucoidan, chondroitin sulfate, porphyran, funoran, dermatan sulfate, and heparin, 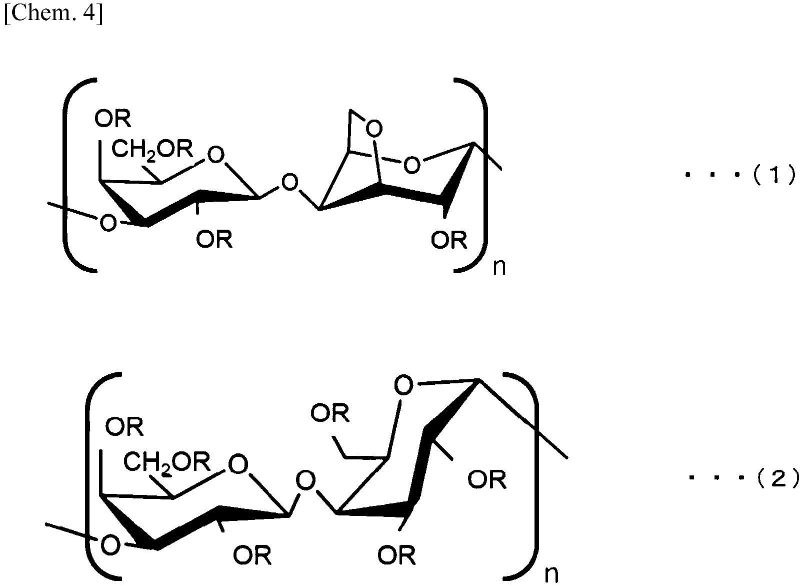
   wherein, in Formulae (1) and (2), each R is independently a hydrogen atom or a group represented by Formula (3), at least one R in each pair of parentheses is a group represented by Formula (3), and ***n*** represents a degree of polymerization, 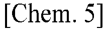 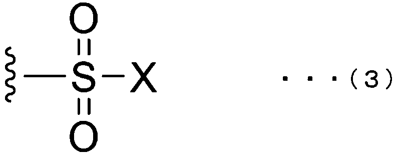
   wherein, in Formula (3), X is a hydroxyl group or -O⁻(M^{m+})_{1/m}, M^{m+} is an m-valent cation, ***m*** is 1, 2, or 3, and the wavy line is a bonding site with another atom.
[Aspect 17] The dried solid according to Aspect 16,
   wherein the amorphous sulfated polysaccharide is carrageenan.
[Aspect 18] The dried solid according to Aspect 17,
   wherein the amorphous sulfated polysaccharide is at least one selected from the group consisting of lambda-carrageenan, kappa-carrageenan, and iota-carrageenan.
[Aspect 19] A dried solid produced by the method according to any one of Aspects 1 to 11.

By mixing the dried solid obtained by the production method of the present disclosure or the dried solid of the present disclosure with water, the composite having heat-ray absorption properties can be dispersed in water. The redispersed composite can exhibit excellent heat-ray absorption properties.

### DETAILED DESCRIPTION

Hereinafter, embodiments are described, but the present disclosure is not limited to these embodiments. Without departing from the technical scope of the claims, various modifications, changes, additions, omissions, and/or combinations of the following embodiments are possible.

In the present application, unless otherwise stated, a numerical range expressed herein using the term "to" includes respective values described before and after the term "to" as the lower limit value and the upper limit value. The upper limit value and the lower limit value of the numerical range disclosed herein can be used alone or in any combination.

In the present application, unless otherwise stated, the terms "comprise", "include" and "contain" herein mean that additional components may be included, and encompass "consisting of" and "consisting essentially of." The term "consisting essentially of" means that an additional component having substantially no adverse effect may be included. While the term "consisting of" means including only the described material, it does not exclude inclusion of inevitable impurities.

In the present application, the term "and/or" represents at least one of the items described and all possible combinations of the items described.

### (1) Dried Solid

A dried solid (which may be referred to as "a solid concentrate" or "partially dried solid") according to one embodiment comprises a composite comprising sulfated polysaccharide and polythiophene and has a moisture content of 15 wt% or more.

### (Sulfated Polysaccharide)

A sulfated polysaccharide is a polysaccharide having a sulfate ester group as a substituent. The sulfate ester group content of the sulfated polysaccharide is not particularly limited, but, for example, may be 1.0 mmol/g to 6.0 mmol/g, 2.0 mmol/g to 5.0 mmol/g, 2.2 mmol/g to 4.8 mmol/g, or 2.5 mmol/g to 4.6 mmol/g. When the content of the sulfate ester groups is within the above range, the sulfated polysaccharide can promote the dispersion of polythiophene, and the spacing between sulfate ester groups is appropriate. The sulfate ester group content can be determined by the combustion absorption-ion chromatography (IC) method (combustion absorption-IC method, combustion IC method).

The sulfated polysaccharide may be at least one selected from the group consisting of amorphous sulfated polysaccharide and sulfated cellulose nanofibers (which may be referred to as "sulfated fine cellulose fibers").

Amorphous sulfated polysaccharide does not encompass a sulfated polysaccharide exhibiting crystallinity, such as sulfated cellulose. In the present disclosure, "amorphous" means that, based on the measurement result of diffraction intensity by an X-ray diffractometer, the cellulose I crystallinity calculated according to Mathematical Formula 1 below is less than 5%. $Cellulose I crystallinity \left(%\right) = \left[\left({I}_{200}-{I}_{am}\right)/{I}_{200}\right] \times 100$ Mathematical formula 1. Here, I₂₀₀ represents the X-ray diffraction intensity at 2θ = 22.6°, and Iₐₘ represents the X-ray diffraction intensity at 2θ = 18.5°.

The amorphous sulfated polysaccharide is not particularly limited, but may be, for example, at least one selected from the group consisting of a sulfated polysaccharide represented by Formula (1) below, a sulfated polysaccharide represented by Formula (2) below, carrageenan, sacran, rhamnan sulfate, fucoidan, chondroitin sulfate, porphyran, funoran, dermatan sulfate, and heparin, 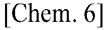 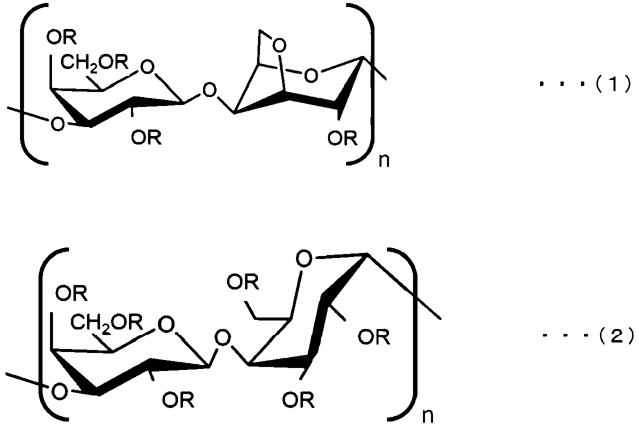
wherein, in Formulae (1) and (2), each R is independently a hydrogen atom or a group represented by Formula (3) below, at least one R in each pair of parentheses is a group represented by Formula (3) below, 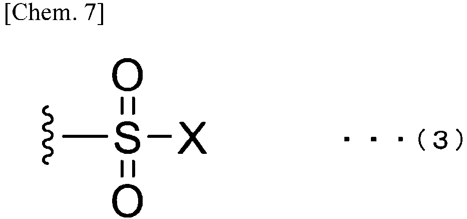
wherein, in Formula (3), X is a hydroxyl group or -O⁻(M^{m+})_{1/m}, M^{m+} is an m-valent cation, ***m*** is 1, 2, or 3, and the wavy line is a bonding site with another atom.

In Formulae (1) and (2), ***n*** represents the degree of polymerization. ***n*** may be 100 or more, 100 to 10,000, 300 to 5,000, or 500 to 2,000. In a case where the degree of polymerization is within the range described above, the dispersion of the composite can have an appropriate viscosity.

The group represented by Formula (3) can, at a bonding site, form a bond with an oxygen atom to form a sulfate ester group.

In Formula (3), when ***m*** is 1, M^{m+} forms an ionic bond with one -SO₃⁻. In the case where ***m*** is 2 or 3, M^{m+} forms an ionic bond with two or three -SO₃⁻. ***m*** is preferably 1.

M^{m+} may be a metal ion or an ammonium ion. The metal ion may be an alkali metal ion, an alkaline earth metal ion, a transition metal ion, or another metal ion.

Examples of alkali metal ions comprise lithium ion (Li⁺), sodium ion (Na⁺), potassium ion (K⁺), rubidium ion (Rb⁺), and cesium ion (Cs⁺). Examples of alkaline earth metal ions comprise calcium ion (Ca²⁺) and strontium ion (Sr²⁺). Examples of transition metal ions comprise iron ion, nickel ion, palladium ion, copper ion, and silver ion. Examples of other metal ions comprise beryllium ion, magnesium ion, zinc ion, and aluminum ion.

An ammonium ion may be NH₄⁺, or an ammonium ion derived from various amines having one or more of the hydrogen atoms of NH₄⁺ replaced by organic groups. Examples of ammonium ions comprise NH₄⁺, quaternary ammonium cations, alkanolamine ions, and pyridinium ions.

From the viewpoint of the viscosity of the aqueous dispersion, M^{m+} may be a sodium ion, a potassium ion, a calcium ion, or a quaternary ammonium cation; may be a sodium ion, a potassium ion, or a calcium ion; or may be a sodium ion.

In Formula (3), X may be a hydroxyl group or -O⁻M⁺, and in particular may be a hydroxyl group or -O⁻Na⁺.

X in the group represented by Formula (3) may be only one kind or may be two or more kinds.

The amorphous sulfated polysaccharide may be carrageenan, and in particular, may be at least one selected from the group consisting of lambda-carrageenan, kappa-carrageenan, and iota-carrageenan.

Carrageenan can be extracted from red algae. Carrageenan has a structure in which D-galactose units are linked by alternate repetition of α-1,3 bonds and β-1,4 bonds. Carrageenan is classified into three types, kappa (κ), iota (τ), and lambda (λ), according to the number of sulfate groups and the presence or absence of anhydro bonds, and any of these can be used as the amorphous sulfated polysaccharide. Namely, the amorphous sulfated polysaccharide may be at least one selected from the group consisting of lambda-carrageenan, kappa-carrageenan, and iota-carrageenan. Carrageenan is commercially available, and a commercial product may be used as is, or a commercial product may be used after purification.

The content of sulfate ester groups of the amorphous sulfated polysaccharide may be, for example, 2.0 mmol/g to 6.0 mmol/g, 2.0 mmol/g to 4.0 mmol/g, or 2.5 mmol/g to 3.5 mmol/g. When the content of the sulfate ester groups is within the above range, the dispersion of polythiophene can be promoted.

The number of constituent monosaccharides of the amorphous sulfated polysaccharide may be, for example, 200 or more, 200 to 20000, 600 to 10000, or 1000 to 4000. Note that, in carrageenan and in the sulfated polysaccharide represented by Formulae (1) and (2), since the structural unit is a disaccharide, twice the degree of polymerization corresponds to the number of constituent monosaccharides. The number of constituent monosaccharides of the amorphous sulfated polysaccharide can be calculated by dividing the number-average molecular weight, determined by a gel permeation chromatography method using standard pullulan as a molecular weight standard, by the molecular weight of a monosaccharide.

The sulfated cellulose nanofibers have a group represented by Formula (4) below as a substituent: 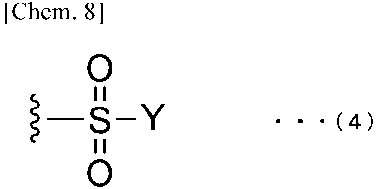 wherein, in Formula (4), Y is a hydroxyl group, -O⁻(M^{m+})_{1/m}, or an alkyl group having 1 to 6 carbon atoms, M^{m+} is an m-valent cation, ***m*** is 1, 2, or 3, and the wavy line is a bonding site with another atom.

The group represented by Formula (4) can, at a bonding site, form a bond with an oxygen atom to form a sulfate ester group.

Examples of alkyl groups having 1 to 6 carbon atoms comprise a methyl group, an ethyl group, an n-propyl group, an isopropyl group, an n-butyl group, a sec-butyl group, a tert-butyl group, an n-pentyl group, a 2-methylbutyl group, a 3-methylbutyl group, a 2-ethylpropyl group, and an n-hexyl group.

Since M^{m+} in Formula (4) is the same as M^{m+} in Formula (3), a description thereof is omitted.

In Formula (4), Y may preferably be a hydroxyl group or -O⁻(M^{m+})_{1/m}, may more preferably be a hydroxyl group or -O⁻M⁺, and may particularly be a hydroxyl group or - O⁻Na⁺.

Y in the group represented by Formula (4) may be only one kind or may be two or more kinds.

The content of the sulfate ester groups in the sulfated cellulose nanofibers may be, for example, 1.0 mmol/g to 6.0 mmol/g, 2.0 mmol/g to 5.5 mmol/g, 3.0 mmol/g to 5.0 mmol/g, or 3.1 mmol/g to 4.6 mmol/g. When the content of the sulfate ester groups is within the above range, the sulfated polysaccharide can promote the dispersion of polythiophene, and the spacing between sulfate ester groups is appropriate. Note that the content of the sulfate ester groups of the sulfated cellulose nanofibers can be adjusted by controlling, for example, the concentration of a reagent such as sulfuric acid in a solution (defibrillation solution) used when defibrillating pulp, the amount of pulp relative to the defibrillation solution, the reaction time and/or the reaction temperature.

The average degree of polymerization of the sulfated cellulose constituting the sulfated cellulose nanofibers may be less than 1500, 200 to 700, 220 to 600, or 240 to 500. When the average degree of polymerization is within the above range, the sulfated cellulose nanofibers can contribute to an improvement in the degree of polymerization of polythiophene while maintaining excellent dispersibility. The average degree of polymerization of the sulfated cellulose is measured by a viscosity method. Specifically, the sulfated cellulose nanofibers are dissolved in a 0.5 M copper ethylenediamine solution, and after maintaining the obtained solution at 25°C, a Cannon-Fenske viscometer is used to measure the viscosity of the solution. Where the viscosity of the solution is η and the viscosity of a 0.5 M copper ethylenediamine solution is η0, the average degree of polymerization is determined by the following formulae: $Intrinsic viscosity \left[η\right] = \left(η/η0\right) / \left\{c\left(1+A\times η/η0\right)\right\}$
wherein c is the concentration (g/dL) of the sulfated cellulose nanofibers at the time of the viscosity measurement, A is an intrinsic value depending on the type of solution, and, in the case of a 0.5 M copper ethylenediamine solution, A = 0.28, $Average degree of ploymerization DP = \left[η\right] / aK$
wherein ***a*** and K are values determined by the type of polymer and solvent, and, in the case of cellulose dissolved in copper ethylenediamine, K = 5.7 × 10⁻³ and ***a*** = 1.

General cellulose (unmodified cellulose) is a polysaccharide in which glucose is linked by β-1,4-glycosidic bonds, and is represented by (C₆H₁₀O₅)ₙ. The sulfated cellulose nanofibers substituted with a group represented by Formula (4) are composed of modified cellulose.

The average fiber width of the sulfated cellulose nanofibers may be 1 nm to 1000 nm, 1 nm to 100 nm, or 2 nm to 10 nm. The average fiber length of the cellulose nanofibers is not particularly limited, but may be 0.1 µm to 6 µm or 0.1 µm to 2 µm. The average fiber width and the average fiber length can be measured, for example, by using an atomic force microscope (SPM-9700HT, manufactured by Shimadzu Corporation), measuring the fiber width (fiber diameter (equivalent circle diameter)) and the fiber length of 50 arbitrarily selected fibers, and taking the arithmetic mean values, respectively. The average fiber width and the average fiber length can be adjusted within a desired range by controlling, for example, the sulfate esterification reaction time and/or the mixing ratio of the reagents.

In the sulfated cellulose nanofibers, a portion of the OH groups in the cellulose constituting the fibers are typically substituted with sulfate ester groups. The sulfated cellulose nanofibers can be produced, for example, by sulfate esterification and fibrillation of raw pulp.

The sulfated cellulose nanofibers may further have a substituent other than the sulfate ester group (hereinafter referred to as "other substituent"). Other substituents typically substitute at least one OH group in the cellulose constituting the cellulose nanofibers. Examples of other substituents comprise an anionic substituent and a salt thereof, an ester group, an ether group, an acyl group, an aldehyde group, an alkyl group, an alkylene group, an aryl group, and a combination of two or more of these. From the viewpoint of nano-dispersibility, the other substituents are preferably an anionic substituent or a salt thereof, an acyl group, or a combination of two or more of these. Examples of preferred anionic substituents comprise carboxyl groups, phosphate ester groups, phosphite ester groups, and xanthate groups. Examples of salts of preferred anionic substituents comprise sodium salts, potassium salts, and calcium salts. Examples of a preferred acyl group comprise an acetyl group.

### (Polythiophene)

Polythiophene typically has monomer units having a thiophene skeleton. Note that "monomer unit" means a monomer-derived structural unit constituting polythiophene, and means the repeating unit of polythiophene. Polythiophene preferably has a monomer unit (repeating unit) represented by Formula (5) below: 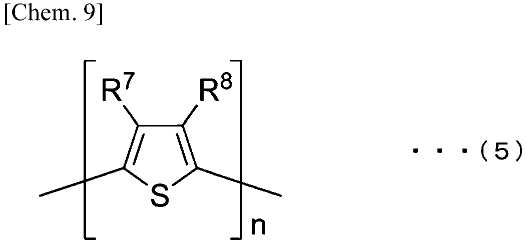 wherein, in Formula (5), R⁷ and R⁸ each independently represent a hydrogen atom, a linear or branched alkyl group having 1 to 8 carbon atoms, or a linear or branched alkoxy group having 1 to 8 carbon atoms, or R⁷ and R⁸ are linked to each other to form a dioxyalkylene group having 1 to 8 carbon atoms, an aromatic ring, or a 3- to 7-membered alicyclic ring, and *n* represents the number of repeating units.

In Formula (5), R⁷ and R⁸ may each independently represent a linear or branched alkyl group having 1 to 6 carbon atoms.

In Formula (5), R⁷ and R⁸ may each independently represent a linear or branched alkoxy group having 1 to 6 carbon atoms.

In Formula (5), R⁷ and R⁸ may be linked to each other to form a dioxyalkylene group having 1 to 6 or 2 to 4 carbon atoms.

In Formula (5), R⁷ and R⁸, together with the carbon atom to which R⁷ and R⁸ are bonded, may form a benzene ring.

In Formula (5), R⁷ and R⁸ may be linked to each other to form a 4- to 7-membered or 5- to 6-membered alicyclic ring.

In Formula (5), the value of ***n*** is not particularly limited, but, for example, may be from 2 to 50. The larger ***n*** is, the more the properties of polythiophene, such as heat-shielding property, tend to improve.

The repeating unit represented by Formula (5) is derived from the monomer (thiophene) represented by Formula (6): 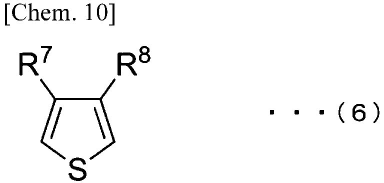 wherein, in Formula (6), R⁷ and R⁸ each independently represent a hydrogen atom, a linear or branched alkyl group having 1 to 8 carbon atoms, or a linear or branched alkoxy group having 1 to 8 carbon atoms, or R⁷ and R⁸ are linked to each other to form a dioxyalkylene group having 1 to 8 carbon atoms, an aromatic ring, or a 3- to 7-membered alicyclic ring.

In Formula (6), R⁷ and R⁸ each independently represent a linear or branched alkyl group having 1 to 8 carbon atoms or a linear or branched alkoxy group having 1 to 8 carbon atoms, or R⁷ and R⁸ may be linked to each other to form a dioxyalkylene group having 1 to 8 carbon atoms.

Examples of thiophenes represented by Formula (6) comprise 3,4-dialkylthiophene, 3,4-dialkoxythiophene, and 3,4-alkylenedioxythiophene. Among these, 3,4-alkylenedioxythiophene is preferred.

More specific examples of the thiophene represented by Formula (6) comprise 3,4-dihexylthiophene, 3,4-diethylthiophene, 3,4-dipropylthiophene, 3,4-dimethoxythiophene, 3,4-diethoxythiophene, 3,4-dipropoxythiophene, 3,4-dibutoxythiophene, 3,4-methylenedioxythiophene, 3,4-ethylenedioxythiophene, and 3,4-propylenedioxythiophene. Among these, 3,4-ethylenedioxythiophene (hereinafter abbreviated as EDOT in some cases) is preferred.

Specific examples of the polythiophene represented by Formula (5) comprise poly(3,4-dihexylthiophene), poly(3,4-diethylthiophene), poly(3,4-dipropylthiophene), poly(3,4-dimethoxythiophene), poly(3,4-diethoxythiophene), poly(3,4-dipropoxythiophene), poly(3,4-dibutoxythiophene), poly(3,4-methylenedioxythiophene), poly(3,4-ethylenedioxythiophene), and poly(3,4-propylenedioxythiophene). Among these, poly(3,4-ethylenedioxythiophene), also abbreviated as PEDOT, is preferred.

### (Dried solid)

The dried solid comprises a composite comprising a sulfated polysaccharide and a polythiophene. The composite comprising sulfated polysaccharide and polythiophene does not comprise any material having a high load on the environment, and has excellent heat-ray absorption properties. The mass ratio of the sulfated polysaccharide to polythiophene comprised in the composite is not particularly limited, and may be adjusted as appropriate.

The dried solid comprises water in addition to the composite. The moisture content of the dried solid is 15 wt% or more. Thereby, in the dispersion (redispersed dispersion) of the composite, prepared by mixing the dried solid with water, the composite can maintain a state in which it is dispersed without aggregation for a long time. Namely, the dried solid can have excellent redispersibility in water. The moisture content of the dried solid may be 30 wt% or less. The moisture content of the dried solid may be 15 wt% to 30 wt% or 15 wt% to 25 wt%.

In an aqueous dispersion (redispersed dispersion) prepared by adding 1 part by weight of the dried solid to 999 parts by weight of deionized water, the composite may have the form of particles having a median diameter D50 within the range of 20 nm to 120 nm, 25 nm to 100 nm, 30 nm to 80 nm, or 37 nm to 60 nm. In this case, the composite can maintain a state of dispersion in an aqueous dispersion for a long time without aggregating.

In a case where an aqueous dispersion (redispersed dispersion) comprising the composite at a concentration of 0.01 wt% is prepared by mixing the dried solid with water, the aqueous dispersion can have an absorbance at a wavelength of 400 nm of 0.040 to 0.200, 0.045 to 0.150, 0.050 to 0.100, or 0.060 to 0.090. Further, the aqueous dispersion, at a wavelength of 1200 nm, can have an absorbance of 0.200 to 0.800, 0.220 to 0.700, 0.240 to 0.600, 0.250 to 0.500, or 0.260 to 0.400. The value obtained by dividing the absorbance at 1200 nm of the aqueous dispersion by the absorbance at 400 nm may be 3.5 or more, 4.0 or more, or 4.5 or more. A higher value obtained by dividing the absorbance at 1200 nm by the absorbance at 400 nm means that the heat-ray absorption properties of the composite are superior. The upper limit of the value obtained by dividing the absorbance at 1200 nm by the absorbance at 400 nm is not particularly limited, but is typically 8.0 or less. Since a composite having the above properties has the excellent heat-ray absorption properties, it is possible to use the composite as a material for products such as heat-ray absorbing films.

As described above, by mixing the dried solid according to the embodiment with water, the redispersion of the composite in water is possible, and it is possible for the redispersed composite to exhibit the excellent heat-ray absorption properties. Therefore, the composite comprising a sulfated polysaccharide and polythiophene can be stored and/or transported in the form of a dried solid according to the embodiment, and thereafter can be used in the manufacture of a product. Accordingly, the dried solid according to the embodiment contributes to a reduction in the cost of transportation and/or storage of a composite comprising a sulfated polysaccharide and polythiophene as heat-ray absorbing materials.

The dried solid may further comprise other components (for example, an inorganic additive or an organic additive).

The inorganic additive may be, for example, inorganic fine particles. Examples of inorganic fine particles comprise fine particles of silica, mica, talc, clay, carbon, carbonates (for example, calcium carbonate and magnesium carbonate), oxides (for example, aluminum oxide, titanium oxide, zinc oxide, and iron oxide), ceramics (for example, ferrite), or fine particles of mixtures thereof. The dried solid may comprise inorganic fine particles in an amount within the range of 0.09 wt% to 5 wt%.

Examples of organic additives comprise functional compounds such as colorants, UV absorbers, antioxidants, antistatic agents, and surfactants. The dried solid may comprise an organic additive in an amount within the range of 0.09 wt% to 5 wt%.

### (2) Method for Producing Dried Solid

A production method for a dried solid according to one embodiment comprises the separation of a solid phase from a dispersion of a composite comprising a sulfated polysaccharide and polythiophene, and drying the solid phase to obtain a dried solid having a moisture content of 15 wt% or more. By this production method, it is possible to produce the dried solid according to the above embodiment.

### (Preparation of Dispersion of Composite)

The dispersion of the composite comprising the sulfated polysaccharide and polythiophene can be prepared as follows.

In the presence of a sulfated polysaccharide, a solvent, and an oxidizing agent, oxidative polymerization of thiophene is performed. Specifically, the sulfated polysaccharide is dispersed in a dispersion medium (for example, water) to prepare a dispersion, thiophene and the oxidizing agent are added thereto to polymerize the thiophene, and polythiophene is generated. Accordingly, the dispersion in which the composite comprising the sulfated polysaccharide and polythiophene is dispersed in the dispersion medium can be obtained. While a limiting interpretation is not desired, in the composite, it is considered that an anion of a sulfated polysaccharide is doped into polythiophene.

The oxidizing agent (hereinafter sometimes referred to as a polymerization initiator) is not particularly limited if oxidative polymerization of thiophene is possible. Examples of oxidizing agents comprise peroxodisulfate, sodium peroxodisulfate, potassium peroxodisulfate, ammonium peroxodisulfate, inorganic iron(III) salts, organic iron(III) salts, hydrogen peroxide, potassium permanganate, potassium dichromate, alkali metal perborate salts, iron(III) sulfate, and iron(III) chloride. Among these, peroxodisulfate, sodium peroxodisulfate, potassium peroxodisulfate, ammonium peroxodisulfate, iron(III) sulfate, and iron(III) chloride are preferred. One may use one of these oxidizing agents alone, or one may use a combination of two or more oxidizing agents.

The amount of the oxidizing agent to be used is not particularly limited, but may be, for example, within the range of 0.1 to 5 equivalents or 0.3 to 2 equivalents per mole of thiophene.

The amount of thiophene to be added can be adjusted as appropriate, but, for example, may be within the range of 0.5 mol to 3.0 mol or 0.7 mol to 2.0 mol per mole of a monosaccharide constituting the sulfated polysaccharide.

As the dispersion medium, a medium in which thiophene can undergo a polymerization reaction is used. Examples of usable dispersion media comprise an aqueous solvent, particularly water. As the dispersion medium, an aqueous solvent obtained by mixing water with a lower alcohol (for example, methanol and/or ethanol) or a polar organic solvent (for example, acetone and/or acetonitrile) may be used. These solvents may be used singly or in a combination of two or more.

The amount of the solvent is not particularly limited, but, for example, may be within the range of 1000 mL to 50000 mL or 10000 mL to 40000 mL per mole of thiophene.

The time and temperature of the polymerization reaction may be set as appropriate depending on the type of the raw material compounds, namely thiophene and sulfated polysaccharide, the type of the oxidizing agent, and the like. The polymerization reaction temperature may be, for example, within the range of 5°C to 90°C or 10°C to 80°C. The polymerization reaction time may be, for example, in a range of from 1 hour to 96 hours or from 3 hours to 48 hours.

By adding an organic solvent to the dispersion obtained after the polymerization reaction, the dispersion of the composite may be prepared in which the dispersion medium comprises water and an organic solvent. Thereby, it is possible to reduce the energy required for the later-described solid phase drying step. Examples of suitable organic solvents comprise alcohols such as 2-propanol, methanol, ethanol, 1-butanol, 2-butanol, isobutanol, and t-butanol; acetone; ethylene glycol; propylene glycol; and acetonitrile.

### (Separation of Solid Phase from Dispersion)

The solid phase is separated from the dispersion of the composite prepared as described above. The separation of the solid phase can be carried out by at least one of filtration such as gravity filtration, reduced-pressure filtration, pressure filtration, centrifugal filtration, or sedimentation separation such as centrifugation . In particular, the solid phase may be separated from the dispersion by centrifugal filtration.

The operation of adding the separated solid phase again to a solvent to disperse the composite and then separating the solid phase by at least one of filtration or sedimentation separation may be further performed one or more times. Accordingly, impurities such as oxidizing agents in the dispersion can be removed. Since impurities in the dispersion can be removed in the process of separating the solid phase from the dispersion, the dispersion may be prepared without undergoing purification by dialysis or the like. The solvent used for the redispersion of the separated solid phase may be an organic solvent. Examples of suitable organic solvents comprise alcohols such as 2-propanol, methanol, ethanol, 1-butanol, 2-butanol, isobutanol, and t-butanol; acetone; ethylene glycol; propylene glycol; and acetonitrile.

### (Drying of Solid Phase)

The solid phase recovered as described above is dried to obtain a dried solid having a moisture content of 15 wt% or more. The moisture content of the dried solid can be controlled by drying conditions such as drying time, temperature, and pressure. For example, by drying the recovered solid phase at a temperature of 60°C or lower, the dried solid having a moisture content of 15 wt% or more can be obtained. The moisture content of the dried solid may be 15 wt% to 30 wt% or 15 wt% to 25 wt%.

It should be noted that the dried solid comprising the composite can also be obtained by drying the dispersion of the composite purified by dialysis or the like to remove the dispersion medium. However, the dried solid can be obtained with less energy by drying the solid phase recovered from the dispersion. Further, in the case of obtaining the dried solid by drying the solid phase recovered from the dispersion, the entire solid phase is uniformly dried, allowing a powdery dried solid that is easy to handle to be obtained.

### (3) Use of Dried Solid

The dried solid according to the embodiment can be used for the manufacture of heat-ray absorbing products such as heat-ray absorbing films.

For example, by adding the dried solid to an aqueous solution of a resin or an aqueous emulsion of a resin to prepare a coating liquid comprising a polymer and a composite comprising a sulfated polysaccharide and a polythiophene, and by applying the coating liquid onto a substrate and drying it, a heat-ray absorbing film in which the composite is dispersed in a polymer matrix can be produced.

Examples of polymers comprise vinyl acetate-polyvinyl alcohol copolymer, polypropylene glycol, polyethylene glycol, polyvinyl alcohol, polyvinyl alcohol-ethylene copolymer, polyvinyl alcohol-butenediol copolymer, polyethylene-vinyl acetate copolymer, cellulose monoalkylate (the alkyl group has 1 to 18 carbon atoms), cellulose dialkylate (the alkyl group has 1 to 18 carbon atoms), cellulose trialkylate (the alkyl group has 1 to 18 carbon atoms), polyethylene, polypropylene, polystyrene, polyalkyl (meth)acrylate (the alkyl group has 1 to 18 carbon atoms), sodium carboxymethyl cellulose, cellulose alkyl ether (the alkyl group has 1 to 18 carbon atoms), polyethylene terephthalate, polyethylene naphthalate, polyacrylamide and its derivatives, poly(meth)acrylic acid, polyvinyl chloride, cellulose, starch, gelatin, pullulan, dextran, hydroxyalkylene (meth)acrylate (the alkyl group has 1 to 18 carbon atoms), polyurethane, nylon-6,6, nylon-6, nylon-6,10, polyvinyl alkyral (the alkyl group has 1 to 18 carbon atoms), polyimide, syndiotactic 1,2-polybutadiene, 1,4-polybutadiene, polyisoprene, polystyrene-butadiene copolymer, ABS resin, phenolic resin, siloxane polymer, and silsesquioxane.

The thickness of the heat-ray absorbing film is not particularly limited, but may be, for example, 0.1 µm to 10000 µm, 1 µm to 1000 µm, or 5 µm to 100 µm.

The method for applying the coating liquid to the substrate is not particularly limited, and examples comprise a spray coating method, a spin coating method, an air knife coating method, a curtain coating method, a blade coating method, a dip coating method, a casting method, a two-roll coating method, a gate roll press method, a roll coating method, a bar coating method, a die coating method, a gravure coating method, a mist method, a printing method, and an inkjet method.

The drying method is not particularly limited, and examples comprise natural drying, heated drying, freeze-drying, reduced-pressure drying, hot air drying, heat-press drying, infrared ray drying, and supercritical drying. The drying temperature may be set as appropriate depending on the material and the drying method, and, for example, may be 50°C to 250°C, 60°C to 150°C, or 80°C to 120°C. By setting the drying temperature to 250°C or lower, it is possible to prevent or reduce a decrease in the heat-ray absorption properties of the composite during drying. In addition, by setting the drying temperature higher, it is possible to shorten the drying time and/or improve the quality of the formed film.

As the substrate, for example, a glass plate, a plastic sheet, or plastic film or the like can be used. Examples of plastics comprise polyester, polyethylene, polypropylene, polystyrene, polyimide, poly(meth)acrylate ester, polyamide, polyethylene terephthalate, polyethylene naphthalate, epoxy resin, chlorine-based resin, silicone resin, phenolic resin, and mixtures thereof.

### Examples

Hereinafter, the present disclosure will be specifically described by way of examples, but the present disclosure is not limited to these examples.

### (1) Materials

The following sulfated polysaccharides were used in the Examples.
Carrageenan 1: kappa-carrageenan (manufactured by Taisho Technos Co., Ltd.)
Carrageenan 2: iota-carrageenan (manufactured by Taisho Technos Co., Ltd.)
Carrageenan 3: lambda-carrageenan (manufactured by Taisho Technos Co., Ltd.)
Carrageenan 4: iota-carrageenan (manufactured by Takara Gen Co., Ltd.)
Carrageenan 5: iota-carrageenan (manufactured by Sansho Co., Ltd.)
Sulfated cellulose fibers (S-CNF) 1: S-CNF synthesized in Synthesis Example 1 below
Sulfated cellulose fibers (S-CNF) 2: S-CNF synthesized in Synthesis Example 2 below

### (2) Synthesis of Sulfated Cellulose Nanofibers (S-CNF)

### [Synthesis Example 1]

150 g of DMSO, 16.5 g of acetic anhydride, and 3.2 g of 98% sulfuric acid were charged into a 300 mL sample bottle and stirred for about 30 seconds at a room temperature of 23°C using a magnetic stirrer to prepare a defibrillation solution.

Subsequently, 5.0 g of softwood kraft pulp NBKP (manufactured by Nippon Paper Industries Co., Ltd.) was added to the defibrillation solution, and the mixture was further stirred for 120 minutes at a room temperature of 23°C to carry out a sulfate esterification reaction. After stirring, 250 mL of distilled water was added to the defibrillation solution comprising cellulose to stop the reaction, and subsequently a 10 mass % aqueous sodium hydroxide solution was added until the pH reached 7 to neutralize the reaction liquid. Thereafter, the supernatant was removed by centrifugation to obtain a solid content.

After adding 1350 mL of distilled water and 1350 mL of ethanol to the solid content and stirring until uniform dispersion was achieved, the solid content was washed by removing the supernatant by centrifugation. This procedure was repeated to perform washing for a total of six times. In each operation, the speed of centrifugation was 12,000 rpm, and the centrifugation time was 50 minutes. After washing, distilled water was added to the solid content until the total weight reached 1000 g to obtain a non-uniform mixture comprising sulfated cellulose nanofibers and water.

Next, the non-uniform mixture was stirred for 3 minutes using a mixer (G5200, manufactured by Biolomix) to obtain 1000 g of an aqueous dispersion in which 0.5 mass % of sulfated cellulose nanofibers were uniformly dispersed. Subsequently, the obtained aqueous dispersion of sulfated cellulose nanofibers was dried for 72 hours using a freeze dryer (FDU-2110, manufactured by Tokyo Rikakikai Co., Ltd.) to obtain dried sulfated cellulose nanofibers.

5 g of the dried sulfated cellulose nanofibers were processed with a dry pulverizer (Wonder Blender WB1, manufactured by Osaka Chemical Co., Ltd.) for 3 minutes to obtain sulfated cellulose fibers (S-CNF) 1, which are a sulfated cellulose nanofiber powder.

### [Synthesis Example 2]

5.0 g of softwood kraft pulp NBKP (manufactured by Nippon Paper Industries Co., Ltd.) was added to 500 mL of N,N-dimethylformamide (DMF), and the mixture was cooled to 10°C. To DMF comprising softwood kraft pulp (NBKP), under a nitrogen atmosphere, 3.6 mL of chlorosulfonic acid was added dropwise over 60 minutes and the mixture was stirred for 1 hour to obtain a reaction.

The reaction solution was poured into 5000 mL of a saturated sodium acetate solution, and after reprecipitation, the supernatant was removed by centrifugation, and the solid content was obtained. After the solid content was washed once with a saturated ethanol solution of sodium acetate, it was washed with ethanol until the supernatant became neutral. Thereafter, the supernatant was removed by centrifugation to obtain the solid content, distilled water was added to the solid content until the entire weight reached 1000 g, and a non-uniform mixture comprising sulfated cellulose nanofibers and water was obtained.

Next, the non-uniform mixture was stirred for 3 minutes using the mixer (G5200, manufactured by Biolomix) to obtain 1000 g of an aqueous dispersion in which 0.5 mass % of the sulfated cellulose nanofibers was uniformly dispersed. Subsequently, the obtained aqueous dispersion of sulfated cellulose nanofibers was dried for 72 hours using a freeze dryer (FDU-2110, manufactured by Tokyo Rikakikai Co., Ltd.), to obtain dried sulfated cellulose nanofibers.

Subsequently, 5 g of the dried sulfated cellulose nanofibers was processed with a dry pulverizer (Wonder Blender WB1, manufactured by Osaka Chemical Co., Ltd.) for 3 minutes to obtain sulfated cellulose fibers (S-CNF) 2, which are a sulfated cellulose nanofiber powder.

### (3) Quantification of Sulfate Ester Group Content in Sulfated Polysaccharide

The sulfate ester group content in the sulfated polysaccharide was quantified using the combustion absorption-IC method. Specifically, 0.01 g of dried sulfated polysaccharide was loaded on a magnetic board and combusted in an annular furnace at 1350°C under an oxygen atmosphere (flow rate: 1.5 L/min). The generated gas component was absorbed into 20 mL of a 3% hydrogen peroxide solution. The obtained absorption solution was diluted with pure water to 100 mL, and the sulfate ion concentration (mass%) of the diluted solution was measured by ion chromatography. Based on the measurement result, the sulfate ester group content (mmol/g) per gram of the sulfated polysaccharide was calculated. The results are shown in Table 1.

### (4) Synthesis of Composite

### [Examples 1 to 15, Comparative Examples 1 to 10]

Deionized water was added to 13.33 g of a sulfated polysaccharide to prepare 653.33 g of a 2.0 wt% aqueous dispersion. To the dispersion, 3.37 g of 3,4-ethylenedioxythiophene (EDOT) was added, and the mixture was internally ultrasonicated for 1 minute to disperse the EDOT. Next, 6.35 g of concentrated hydrochloric acid, 25.38 g of a 0.48 g/L iron(III) chloride hexahydrate aqueous solution, and 3.11 g of potassium peroxodisulfate were added and stirred at 40°C for 4 hours. After stirring, the mixture was added dropwise to 2100 g of 2-propanol, stirred for 15 minutes, and then filtered using a small centrifuge (H-112 manufactured by Kokusan Co., Ltd.) to recover the first filtration cake. After adding the first filtration cake to 323 g of 2-propanol and stirring for 15 minutes, filtration was performed with a small centrifuge (H-112 manufactured by Kokusan Co., Ltd.) to recover the second filtration cake. The second filtration cake was spread on a tray, placed in a vacuum constant-temperature dryer (manufactured by Tokyo Rikakikai Co., Ltd.), and dried under the conditions described in Table 1 to remove 2-propanol. Accordingly, 13.11 g of a dried solid of a composite of poly(3,4-ethylenedioxythiophene) (PEDOT) and a sulfated polysaccharide (hereinafter, referred to as "PEDOT/sulfated polysaccharide composite" as appropriate) was obtained.

### [Comparative Example 11]

Deionized water was added to 1.33 g of carrageenan 2 to prepare 65.33 g of a 2.0 wt% aqueous dispersion. To the dispersion, 0.337 g of 3,4-ethylenedioxythiophene (EDOT) was added, and the mixture was internally ultrasonicated for 1 minute to disperse the EDOT. Next, 0.635 g of concentrated hydrochloric acid, 2.538 g of a 0.48 g/L iron(III) chloride hexahydrate aqueous solution, and 0.311 g of ammonium peroxodisulfate were added, and the mixture was stirred 40°C for 4 hours. After stirring, the mixture was placed into a cellulose tube for dialysis (Visking tube, molecular weight cutoff: about 3500, pore size: 1.25 nm) and stirred in 2000 g of deionized water. The deionized water was replaced every 24 hours, and dialysis was performed for a total of 72 hours. Thereby, an aqueous dispersion of a composite of PEDOT and carrageenan 2 (hereinafter, referred to as "PEDOT/sulfated polysaccharide composite" as appropriate) was obtained.

### (5) Measurement of Moisture Content

The moisture content of the dried solids of the PEDOT/sulfated polysaccharide composites of Examples 1 to 15 and Comparative Examples 1 to 10 was measured using an electronic moisture meter (MOC63u manufactured by Shimadzu Corporation). Specifically, 1 g of the dried solid was heated at 120°C until the rate of weight change over 30 seconds reached 0.01% or less, and the moisture content of the dried solid was calculated from the amount of weight decrease of the dried solid. The results are shown in Table 1.

### (6) Evaluation of Redispersibility in Water

The redispersibility in water of the dried solids of the PEDOT/sulfated polysaccharide composites of Examples 1 to 15 and Comparative Examples 1 to 10 was evaluated. Specifically, 1 part by weight of the dried solid was added to 999 parts by weight of deionized water, and stirred by hand shaking to prepare an aqueous dispersion of the composite having a concentration of 0.1 wt%. After the aqueous dispersion was allowed to stand for 72 hours, the dispersion state of the composite was confirmed by visual observation. The results are shown in Table 1. In Table 1, A represents that the composite was dispersed in water, and B represents that the composite was aggregated in water.

### (7) Measurement of Absorbance of Dispersion

The dried solid of the PEDOT/sulfated polysaccharide composite of each of Examples 1 to 15 or Comparative Examples 1 to 10 was added to deionized water and stirred to prepare an aqueous dispersion of the composite at a concentration of 0.01 wt%. The aqueous dispersion of the PEDOT/sulfated polysaccharide composite prepared in Comparative Example 11 was diluted with deionized water to prepare an aqueous dispersion of the composite having a concentration of 0.01 wt%. Using a UV-visible-near-infrared spectrophotometer (V-770ST manufactured by JASCO Corporation), the absorbance of these 0.01 wt% aqueous dispersions was measured at 1 nm intervals in the wavelength range of 200 nm to 1800 nm. The absorbance at a wavelength of 400 nm, the absorbance at a wavelength of 1200 nm, and the value obtained by dividing the absorbance at a wavelength of 1200 nm by the absorbance at a wavelength of 400 nm (absorbance at a wavelength of 1200 nm/absorbance at a wavelength of 400 nm) are shown in Table 1. The value obtained by dividing the absorbance at a wavelength of 1200 nm by the absorbance at a wavelength of 400 nm represents the heat-ray absorption properties of the composite.

### (8) Measurement of Particle Diameter

The particle size distribution in water of 1 part by weight of the dried solid of the PEDOT/sulfated polysaccharide composite of each of Examples 1 to 15 or Comparative Examples 1 to 10 was measured. Specifically, 1 part by weight of the dried solid was added to 999 parts by weight of deionized water and stirred to prepare an aqueous dispersion of the PEDOT/sulfated polysaccharide composite at a concentration of 0.1 wt%, and a laser diffraction particle size distribution analyzer (Mastersizer 3000+, manufactured by Malvern Panalytical) was used to measure the particle size distribution of the composite in the aqueous dispersion. Further, the aqueous dispersion of the PEDOT/sulfated polysaccharide composite prepared in Comparative Example 11 was diluted with deionized water to prepare an aqueous dispersion of the composite at a concentration of 0.1 wt%, and the above laser diffraction particle size distribution analyzer was used to measure the particle size distribution of the composite in the aqueous dispersion. The median diameter D50 of the composite was determined from the particle size distribution. The results are shown in Table 1.

### (9) Production of Film

### (9-1) Water-Soluble Resin Film

In a 1000 mL container, 60 g of polyvinyl alcohol copolymer (RS-1717 manufactured by Kuraray Co., Ltd.) and 400 g of deionized water were stirred at 100°C for 4 hours to prepare a 13.0 wt% resin aqueous solution.

To 161.0 g of the resin aqueous solution, 1.30 g of the dried solid of Example 3 was added, and further, a surfactant solution prepared by dissolving 0.042 g of octylphenol ethoxylate (Triton X-100 manufactured by Nacalai Tesque, Inc.) in 37.9 g of deionized water was added, and the mixture was stirred well to prepare a coating liquid.

The coating liquid was applied onto a polyester film (Toray Lumirror (registered trademark) T60) with a doctor blade to form a coating. The coating was dried at 90°C for 30 minutes, and a water-soluble resin film having a thickness of 10 µm and a composite content of 5 wt% was obtained. The thickness of the film was measured using a 3D laser measuring microscope (Olympus OLS5100).

### (9-2) Water-Based Emulsion Resin Film

To 76.9 g of well-stirred urethane acrylate emulsion (UCECOAT 7200 from Daicel-Ornex Corporation, solid content concentration 65 wt%), 3.09 g of the dried solid of Example 3 was added, 2.00 g of a photopolymerization initiator (IRGACURE 1173 manufactured by BASF) and 0.40 g of a surface conditioner (Surfynol 104E manufactured by Nisshin Chemical Industry Co., Ltd.) were added, and the mixture was stirred well. Thereby, the coating liquid was prepared.

The coating liquid was applied onto a polyester film (Toray Lumirror (registered trademark) T60) with a doctor blade to form a coating. The coating was dried at 80°C for 10 minutes. Using an ultraviolet irradiation apparatus (iGrantage ECS-401GX model manufactured by iGraphics Co., Ltd.), the coating was irradiated with ultraviolet rays having an irradiance of 200 mW/cm² and an integrated light quantity of 800 mJ/cm² to cure the coating. Accordingly, a water-based emulsion resin film having a thickness of 10 µm and a composite content of 5 wt% was obtained. The thickness of the film was measured using a 3D laser measuring microscope (Olympus OLS5100).

### (9-3) Aqueous Inorganic-Organic Hybrid Resin Film

To 128.2 g of a well-stirred polysiloxane/epoxysilane-curable acrylic resin (CERANATE WSA-1070 manufactured by DIC Corporation, solid content concentration 39 wt%), 3.09 g of the dried solid of Example 3 was added, 0.40 g of a surface conditioner (Surfynol 104E manufactured by Nisshin Chemical Industry Co., Ltd.) was added, and then stirred well. Thereby, the coating liquid was prepared.

The coating liquid was applied onto a polyester film (Toray Lumirror (registered trademark) T60) with a doctor blade to form a coating. The coating was dried at 80°C for 10 minutes. Accordingly, an aqueous inorganic-organic hybrid resin film having a thickness of 10 µm and a composite content of 5 wt% was obtained. The thickness of the film was measured using the 3D laser measuring microscope (Olympus OLS5100).

### (10) Measurement of Absorbance of Film

The absorbance of the produced water-soluble resin film, water-based emulsion resin film, and aqueous inorganic-organic hybrid resin film was measured at 1 nm intervals over the wavelength range of 200 nm to 1850 nm using a UV-visible-near-infrared spectrophotometer (V-770ST manufactured by JASCO Corporation). The absorbance at a wavelength of 400 nm, the absorbance at a wavelength of 1200 nm, and the value obtained by dividing the absorbance at a wavelength of 1200 nm by the absorbance at a wavelength of 400 nm (absorbance at a wavelength of 1200 nm/absorbance at a wavelength of 400 nm) are shown in Table 2.

**[Table 1-1]**

| | Sulfated Polysaccharide | | | Drying Conditions | | |
|---|---|---|---|---|---|---|
| | Name | Type | Sulfate Ester Group Content (mmol/g) | Temperature (°C) | Gauge Pressure (MPa) | Time (h) |
| Example 1 | Carrageenan 1 | Kappa | 2.5 | 40 | ≤ -0.090 | 1 |
| Example 2 | | | | 60 | ≤ -0.090 | 1 |
| Comparative Example 1 | | | | 80 | ≤ -0.090 | 1 |
| Example 3 | Carrageenan 2 | Iota | 3.1 | 20 | 0 | 48 |
| Example 4 | | | | 40 | ≤ -0.090 | 1 |
| Comparative Example 2 | | | | 40 | ≤ -0.090 | 100 |
| Example 5 | | | | 60 | ≤ -0.090 | 1 |
| Comparative Example 3 | | | | 60 | ≤ -0.090 | 12 |
| Comparative Example 4 | | | | 80 | ≤ -0.090 | 1 |
| Comparative Example 5 | | | | 80 | ≤ -0.090 | 12 |
| Example 6 | Carrageenan 3 | Lambda | 3.4 | 40 | ≤ -0.090 | 1 |
| Example 7 | | | | 60 | ≤ -0.090 | 1 |
| Comparative Example 6 | | | | 80 | ≤ -0.090 | 1 |
| Example 8 | Carrageenan 4 | Iota | 3.2 | 40 | ≤ -0.090 | 1 |
| Example 9 | | | | 60 | ≤ -0.090 | 1 |
| Comparative Example 7 | | | | 80 | ≤ -0.090 | 1 |
| Example 10 | Carrageenan 5 | Iota | 3.3 | 40 | ≤ -0.090 | 1 |
| Example 11 | | | | 60 | ≤ -0.090 | 1 |
| Comparative Example 8 | | | | 80 | ≤ -0.090 | 1 |
| Example 12 | S-CNF 1 | - | 3.1 | 40 | ≤ -0.090 | 1 |
| Example 13 | | | | 60 | ≤ -0.090 | 1 |
| Comparative Example 9 | | | | 80 | ≤ -0.090 | 1 |
| Example 14 | S-CNF2 | - | 4.6 | 40 | ≤ -0.090 | 1 |
| Example 15 | | | | 60 | ≤ -0.090 | 1 |
| Comparative Example 10 | | | | 80 | ≤ -0.090 | 1 |
| Comparative Example 11 | Carrageenan 2 | Iota | 3.1 | - | - | - |

**[Table 1-2]**

| | Moisture Content (wt%) | Redispersibility | Absorbance at 400 nm | Absorbance at 1200 nm | Absorbance at 1200 nm /Absorbance at 400 nm | Particle Diameter D50 (nm) |
|---|---|---|---|---|---|---|
| Example 1 | 17.2 | A | 0.088 | 0.396 | 4.5 | 39 |
| Example 2 | 15.9 | A | 0.080 | 0.360 | 4.5 | 55 |
| Comparative Example 1 | 13.2 | B | 0.039 | 0.176 | 4.5 | 210 |
| Example 3 | 19.1 | A | 0.081 | 0.365 | 4.5 | 39 |
| Example 4 | 17.7 | A | 0.077 | 0.347 | 4.5 | 40 |
| Comparative Example 2 | 11.6 | B | 0.013 | 0.036 | 2.8 | 1800 |
| Example 5 | 15.1 | A | 0.074 | 0.333 | 4.5 | 48 |
| Comparative Example 3 | 8.2 | B | 0.011 | 0.033 | 3.0 | 2200 |
| Comparative Example 4 | 14.1 | B | 0.033 | 0.149 | 4.5 | 261 |
| Comparative Example 5 | 6.7 | B | 0.010 | 0.032 | 3.2 | 2900 |
| Example 6 | 18.2 | A | 0.083 | 0.374 | 4.5 | 40 |
| Example 7 | 16.3 | A | 0.081 | 0.365 | 4.5 | 49 |
| Comparative Example 6 | 11.2 | B | 0.035 | 0.158 | 4.5 | 166 |
| Example 8 | 20.2 | A | 0.075 | 0.338 | 4.5 | 39 |
| Example 9 | 17.7 | A | 0.073 | 0.329 | 4.5 | 44 |
| Comparative Example 7 | 13.3 | B | 0.031 | 0.140 | 4.5 | 199 |
| Example 10 | 19.9 | A | 0.078 | 0.351 | 4.5 | 42 |
| Example 11 | 17.6 | A | 0.077 | 0.347 | 4.5 | 50 |
| Comparative Example 8 | 14 | B | 0.033 | 0.149 | 4.5 | 189 |
| Example 12 | 22.3 | A | 0.066 | 0.297 | 4.5 | 46 |
| Example 13 | 18.5 | A | 0.060 | 0.270 | 4.5 | 50 |
| Comparative Example 9 | 13.1 | B | 0.029 | 0.131 | 4.5 | 244 |
| Example 14 | 20.9 | A | 0.065 | 0.293 | 4.5 | 46 |
| Example 15 | 18.2 | A | 0.061 | 0.275 | 4.5 | 55 |
| Comparative Example 10 | 13.9 | B | 0.025 | 0.113 | 4.5 | 246 |
| Comparative Example 11 | - | - | 0.077 | 0.346 | 4.5 | 36 |

**[Table 2]**

| Resin | Absorbance at Wavelength of 400 nm | Absorbance at Wavelength of 1200 nm | Absorbance at Wavelength of 1200 nm /Absorbance at Wavelength of 400 nm |
|---|---|---|---|
| Polyvinyl Alcohol | 0.055 | 0.248 | 4.5 |
| Urethane Acrylate | 0.050 | 0.220 | 4.4 |
| Polysiloxane/Epoxysilane-Curable Acrylic Resin | 0.049 | 0.219 | 4.5 |

As shown in Table 1, the median diameter D50 of the particle size distribution measured after redispersing in water the dried solids of the PEDOT/sulfated polysaccharide composite of Examples 1 to 15, which had a moisture content of 15.1 wt% to 22.3 wt%, was 39 nm to 55 nm, indicating that the composite was dispersed without aggregation. The evaluation results of the redispersibility in water also demonstrated that the dried solids of Examples 1 to 15 had excellent redispersibility in water.

On the other hand, the median diameter D50 of the particle size distribution measured after redispersing in water the dried solids of the PEDOT/sulfated polysaccharide composite of Comparative Examples 1 to 10, which had a moisture content of 6.7 wt% to 14.1 wt%, was 166 nm to 2900 nm, which was much larger than that of Examples 1 to 15. This indicates that the composite aggregated in water and was not well redispersed. The evaluation results of the redispersibility in water also demonstrated that the dried solids of Comparative Examples 1 to 10 had insufficient redispersibility in water.

In addition, Table 1 indicates that the dried solids of Examples 1 to 15 having a moisture content of 15.1 wt% to 22.3 wt% could be obtained by drying the second filtration cake recovered by centrifugal filtration at a temperature of 60°C or lower.

When comparing the absorbance measurement results of the dispersion prepared by redispersing in water the dried solids of the PEDOT/sulfated polysaccharide composite of Examples 1 to 15 and the absorbance measurement results of the dispersion of the PEDOT/sulfated polysaccharide composite of Comparative Example 11 purified by dialysis, the value of absorbance at a wavelength of 1200 nm/absorbance at a wavelength of 400 nm was equivalent for both. This demonstrated that, in Examples 1 to 15, drying and the redispersion of the PEDOT/sulfated polysaccharide composite did not lead to deterioration of heat-ray absorption properties.

From Table 2, it was shown that all of the films had excellent heat-ray absorption properties.

## Claims

1. A method for producing a dried solid comprising a composite comprising a sulfated polysaccharide and polythiophene, the method comprising:
separating a solid phase from a dispersion of the composite comprising the sulfated polysaccharide and the polythiophene; and
drying the solid phase to obtain the dried solid having a moisture content of 15 wt% or more.

2. The method according to claim 1,
wherein the dispersion of the composite comprises water and an organic solvent as a dispersion medium.

3. The method according to claim 1 or 2,
wherein the moisture content of the dried solid is 30 wt% or less.

4. The method according to any one of claims 1 to 3,
wherein the dried solid is obtained by drying the solid phase at a temperature of 60°C or lower.

5. The method according to any one of claims 1 to 4,
wherein the separating of the solid phase from the dispersion comprises at least one of filtration or sedimentation separation of the dispersion, preferably centrifugal filtration of the dispersion.

6. The method according to any one of claims 1 to 5,
wherein the dispersion of the composite is prepared without dialysis.

7. The method according to any one of claims 1 to 6,
wherein the sulfated polysaccharide is at least one selected from the group consisting of amorphous sulfated polysaccharide and sulfated cellulose nanofibers.

8. The method according to claim 7,
wherein the amorphous sulfated polysaccharide is at least one selected from the group consisting of a sulfated polysaccharide represented by Formula (1) below, a sulfated polysaccharide represented by Formula (2) below, carrageenan, sacran, rhamnan sulfate, fucoidan, chondroitin sulfate, porphyran, funoran, dermatan sulfate, and heparin, 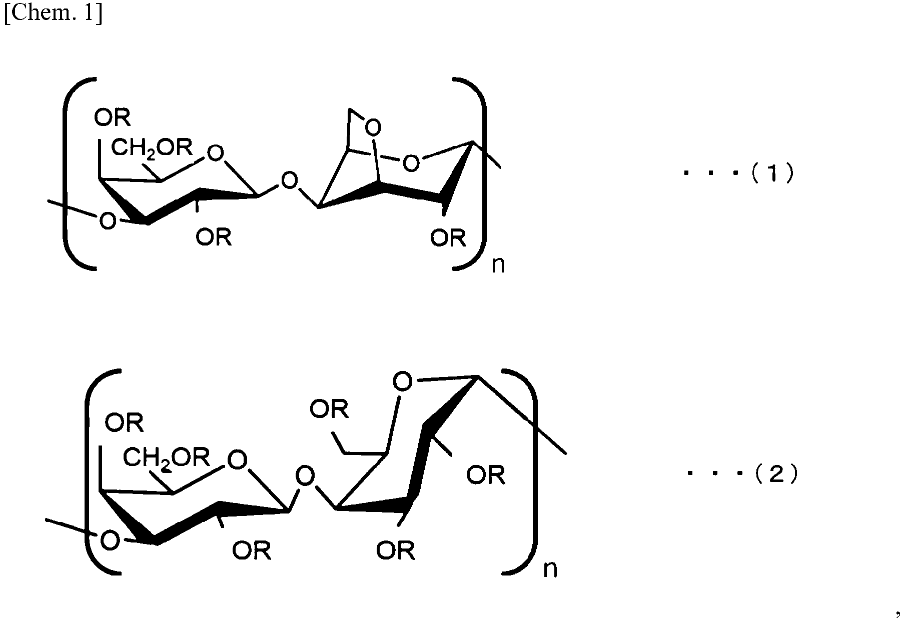
wherein, in Formulae (1) and (2), each R is independently a hydrogen atom or a group represented by Formula (3), at least one R in each pair of parentheses is a group represented by Formula (3), and n represents a degree of polymerization, 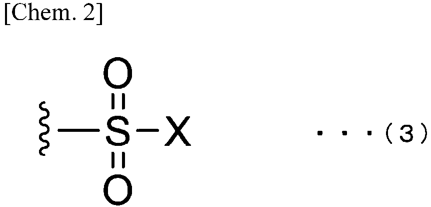
wherein, in Formula (3), X is a hydroxyl group or -O⁻(M^{m+})_{1/m}, M^{m+} is an m-valent cation, ***m*** is 1, 2, or 3, and the wavy line is a bonding site with another atom.

9. The method according to claim 8,
wherein the amorphous sulfated polysaccharide is carrageenan,
preferably wherein the amorphous sulfated polysaccharide is at least one selected from the group consisting of lambda-carrageenan, kappa-carrageenan, and iota-carrageenan.

10. A dried solid comprising:
a composite comprising a sulfated polysaccharide and polythiophene,
wherein the dried solid has a moisture content of 15 wt% or more,
preferably wherein the moisture content of the dried solid is 30 wt% or less.

11. The dried solid according to claim 10,
wherein, in an aqueous dispersion prepared by adding 1 part by weight of the dried solid to 999 parts by weight of deionized water, the composite has a form of particles having a median diameter D50 within a range of 20 nm to 120 nm.

12. The dried solid according to claim 10 or 11,
wherein the sulfated polysaccharide is at least one selected from the group consisting of amorphous sulfated polysaccharide and sulfated cellulose nanofibers.

13. The dried solid according to claim 12,
wherein the amorphous sulfated polysaccharide is at least one selected from the group consisting of a sulfated polysaccharide represented by Formula (1) below, a sulfated polysaccharide represented by Formula (2) below, carrageenan, sacran, rhamnan sulfate, fucoidan, chondroitin sulfate, porphyran, funoran, dermatan sulfate, and heparin, 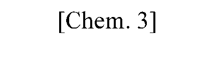 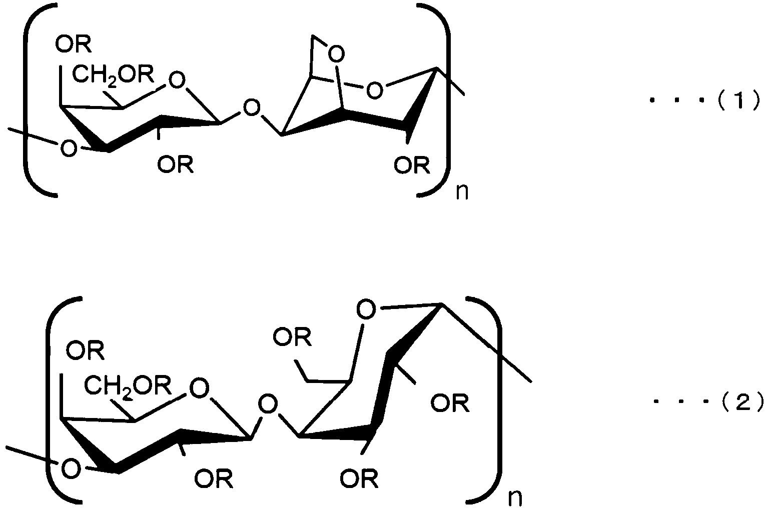
wherein, in Formulae (1) and (2), each R is independently a hydrogen atom or a group represented by Formula (3), at least one R in each pair of parentheses is a group represented by Formula (3), and n represents a degree of polymerization, 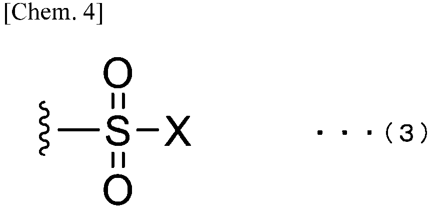
wherein, in Formula (3), X is a hydroxyl group or -O⁻(M^{m+})_{1/m}, M^{m+} is an m-valent cation, *m* is 1, 2, or 3, and the wavy line is a bonding site with another atom.

14. The dried solid according to claim 13,
wherein the amorphous sulfated polysaccharide is carrageenan,
preferably wherein the amorphous sulfated polysaccharide is at least one selected from the group consisting of lambda-carrageenan, kappa-carrageenan, and iota-carrageenan.

15. A dried solid produced by the method according to any one of claims 1 to 9.
